(19) **European Patent Office**

(11) **EP 4 481 470 A2**

(12) **EUROPEAN PATENT APPLICATION**

(43) Date of publication:
**25.12.2024 Bulletin 2024/52**

(21) Application number: **24176028.9**

(22) Date of filing: **15.05.2024**

(51) International Patent Classification (IPC):
**G02B 27/09** (2006.01)    **G02B 27/10** (2006.01)
**G02B 27/28** (2006.01)

(52) Cooperative Patent Classification (CPC):
**G02B 27/283; B23K 26/00; G02B 27/0905;
G02B 27/0922; G02B 27/0944;** G02B 27/1086;
G02B 27/286

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.05.2023   JP 2023089853**

(71) Applicant: **Nichia Corporation
Anan-shi, Tokushima 774-8601 (JP)**

(72) Inventors:
• **DEJIMA, Norihiro
Anan-shi, 774-8601 (JP)**
• **MIZUNO, Shingo
Anan-shi, 774-8601 (JP)**
• **OMORI, Masaki
Anan-shi, 774-8601 (JP)**

(74) Representative: **Betten & Resch
Patent- und Rechtsanwälte PartGmbB
Maximiliansplatz 14
80333 München (DE)**

(54) **WAVELENGTH BEAM COMBINING DEVICE, DIRECT DIODE LASER DEVICE, AND LASER PROCESSING MACHINE**

(57)    A wavelength beam combining device configured to combine collimated beams of different peak wavelengths whose central axes emitted in a first direction are arranged in a second direction intersecting the first direction, includes: an optical element configured to reduce a distance between beam central axes of the collimated beams and to cause the collimated beams with the reduced distance therebetween to exit; and first and second diffraction gratings. The first diffraction grating is disposed at a position where the collimated beams exiting from the optical element are received and to diffract the collimated beams in different directions depending on wavelengths to allow the collimated beams to enter the second diffraction grating. The second diffraction grating is configured to further diffract the collimated beams diffracted by the first diffraction grating to form a wavelength-combined beam and is configured to cause the wavelength-combined beam to exit.

FIG. 1

EP 4 481 470 A2

**Description**

CROSS REFERENCE TO RELATED APPLICATION

This application claims priority to Japanese Patent Application No. 2023-089853, filed on May 31, 2023, the entire contents of which are hereby incorporated by reference.

BACKGROUND

The present disclosure relates to a wavelength beam combining device, a direct diode laser device, and a laser processing machine.

High-power and high-brightness laser beams are used to perform processing such as cutting, drilling, and marking on various types of materials or to weld metal materials. Some of the carbon dioxide gas laser devices and YAG solid-state laser devices that have been used for such laser processing are being replaced with fiber laser devices with high energy conversion efficiency. A laser diode (hereinafter, simply referred to as an LD) is used as a pump light source of the fiber laser device. In recent years, with an increase in the output of an LD, technologies have been developed to use an LD not as a pump light source but as a light source of a laser beam with which a material is directly irradiated to process the material. Such a technology is referred to as a direct diode laser (DDL) technology.

JP 2012-508453 T describes a multi-wavelength beam combiner including a laser stack having a plurality of laser arrays each emitting an optical beam having a unique wavelength, a cylindrical telescope, a conversion lens that intercepts the optical beams from the plurality of laser arrays and combines the optical beams along a stacking dimension of the laser stack to form a multi-wavelength optical beam, and a diffractive element located in an overlap region of the optical beams. Co-axial combining of a plurality of laser beams having mutually different wavelengths is referred to as "wavelength beam combining (WBC)" or "spectral beam combining (SBC)," and may be used to increase the light output and brightness of, for example, a DDL device.

SUMMARY

The output and power density of a laser beam combined by wavelength beam combining need to be further increased.

A wavelength beam combining device according to one embodiment of the present disclosure is a wavelength beam combining device configured to combine a plurality of collimated beams whose peak wavelengths are different from each other and whose central axes of beams emitted in a first direction are arranged in a second direction intersecting the first direction. The wavelength beam combining device includes: an optical element configured to reduce a distance between beam central axes of the plurality of collimated beams and to cause the plurality of collimated beams with the reduced distance therebetween to exit; and a first diffraction grating and a second diffraction grating. The first diffraction grating is disposed at a position where the plurality of collimated beams exiting from the optical element are received and is configured to diffract the plurality of collimated beams in different directions depending on wavelengths to allow the plurality of collimated beams to enter the second diffraction grating. The second diffraction grating is configured to further diffract the plurality of collimated beams diffracted by the first diffraction grating to form a wavelength-combined beam and is configured to cause the wavelength-combined beam to exit.

In one embodiment, a direct diode laser device of the present disclosure includes the above wavelength beam combining device, a plurality of semiconductor laser devices configured to emit laser light beams having mutually different peak wavelengths; and an optical fiber array configured to cause the laser light beams emitted from the plurality of semiconductor laser devices to be formed into the plurality of laser beams so that the plurality of laser beams enters the collimator of the wavelength beam combining device.

In one embodiment, a laser processing machine of the present disclosure includes at least one of the direct diode laser devices described above, an optical transmission fiber into which the wavelength-combined beam emitted from the at least one direct diode laser device is to be coupled; and a processing head connected to the optical transmission fiber.

According to certain embodiments of the present disclosure, a wavelength beam combining device, a direct diode laser device, and a laser processing machine can be provided in which output and power density of a laser beam combined by wavelength beam combining can be further increased.

BRIEF DESCRIPTION OF DRAWINGS

FIG. 1 is a plan view schematically illustrating a configuration of a wavelength beam combining device according to a first embodiment of the present disclosure as seen along a direction perpendicular to a XZ plane.
FIG. 2 is a plan view schematically illustrating the configuration of the wavelength beam combining device according to the first embodiment of the present disclosure as seen along a direction perpendicular to a YZ plane.
FIG. 3 is a view schematically illustrating another configuration example of a beam reducer having a Galilean lens configuration.
FIG. 4 is a view schematically illustrating still another configuration example of the beam reducer having a Galilean lens configuration.

FIG. 5A is a schematic view for illustrating a divergence angle of a laser beam in the XZ plane.

FIG. 5B is a schematic view for illustrating a divergence angle of a laser beam in the YZ plane.

FIG. 6 is a plan view schematically illustrating another configuration of the wavelength beam combining device according to the first embodiment of the present disclosure as seen along the direction perpendicular to the XZ plane.

FIG. 7 is a plan view schematically illustrating another configuration of the wavelength beam combining device according to the first embodiment of the present disclosure as seen along the direction perpendicular to the YZ plane.

FIG. 8 is a plan view schematically illustrating still another configuration of the wavelength beam combining device according to the first embodiment of the present disclosure as seen along the direction perpendicular to the XZ plane.

FIG. 9 is a plan view schematically illustrating a configuration of a wavelength beam combining device including no optical element.

FIG. 10 is a schematic view for illustrating a geometrical relationship between an incident angle and a diffraction angle of a laser beam in a pair of diffraction gratings arranged in parallel.

FIG. 11 is a cross-sectional view schematically illustrating an example of a configuration of a lens barrel.

FIG. 12 is a cross-sectional view schematically illustrating another example of the configuration of the lens barrel.

FIG. 13 is a view schematically illustrating a state in which a plurality of collimated beams whose beam central axes are not parallel to each other enter an optical element.

FIG. 14 is a plan view schematically illustrating a configuration of a wavelength beam combining device according to a second embodiment of the present disclosure as seen along the direction perpendicular to the XZ plane.

FIG. 15 is a plan view schematically illustrating another configuration of a wavelength beam combining device according to the second embodiment of the present disclosure as seen along the direction perpendicular to the XZ plane.

FIG. 16 is a plan view schematically illustrating still another configuration of a wavelength beam combining device according to the second embodiment of the present disclosure as seen along the direction perpendicular to the XZ plane.

FIG. 17 is a plan view schematically illustrating still another configuration of the wavelength beam combining device according to the second embodiment of the present disclosure as seen along the direction perpendicular to the YZ plane.

FIG. 18 is a plan view schematically illustrating a configuration of a direct diode laser device according to an embodiment of the present disclosure as seen along the direction perpendicular to the XZ plane.

FIG. 19 is a plan view schematically illustrating another configuration of the direct diode laser device according to an embodiment of the present disclosure as seen along the direction perpendicular to the XZ plane.

FIG. 20 is a view illustrating a configuration example of a processing machine according to an embodiment of the present disclosure.

DETAILED DESCRIPTION

A wavelength beam combining device, a direct diode laser device, and a laser processing machine according to embodiments of the present disclosure are described below in detail with reference to the drawings. Parts designated with the same reference numerals appearing in the plurality of drawings indicate identical or equivalent parts. The description of the dimensions, materials, shapes, relative arrangements, and the like of components are intended to be illustrative rather than limiting the scope of the present invention. The size, positional relationship, and the like of the members illustrated in the drawings may be exaggerated to facilitate understanding and the like.

First Embodiment of Wavelength Beam Combining Device

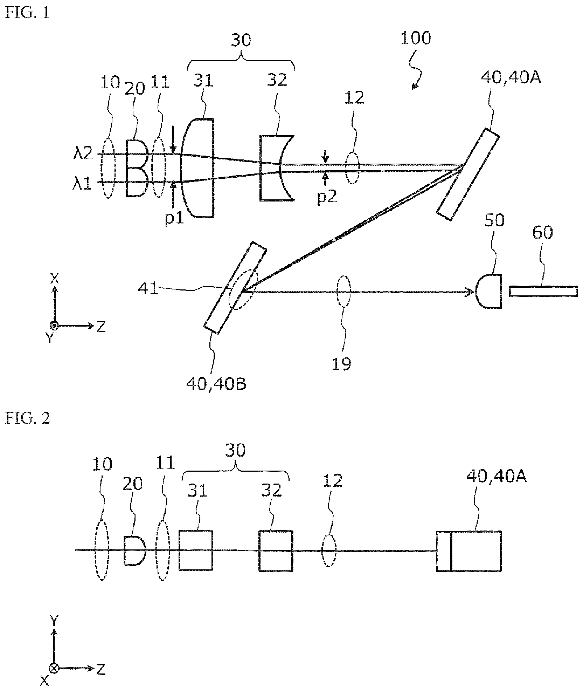

A wavelength beam combining device according to a first embodiment of the present disclosure is described with reference to FIGS. 1 to 4, FIGS. 5A and 5B, and FIGS. 6 to 11. In the drawings, an X-axis, a Y-axis, and a Z-axis orthogonal to each other are illustrated for reference.

FIG. 1 is a plan view schematically illustrating a configuration of the wavelength beam combining device according to the first embodiment of the present disclosure as seen along a direction perpendicular to a XZ plane. FIG. 2 is a plan view schematically illustrating the configuration of the wavelength beam combining device according to the first embodiment of the present disclosure as seen along a direction perpendicular to a YZ plane. FIG. 2 does not illustrate a second diffraction grating 40B and a light converger 50 illustrated in FIG. 1.

A wavelength beam combining device 100 illustrated in FIG. 1 can combine a plurality of laser beams 10 having mutually different peak wavelengths. For the sake of simplicity, FIG. 1 illustrates a configuration example of a device for coaxially combining two laser beams 10 having peak wavelengths of $\lambda 1$ and $\lambda 2$. The number of laser beams 10 to be combined is not limited to two, and three or more laser beams 10 having mutually different peak wavelengths may be combined. Hereinafter, the peak wavelengths of the plurality of laser beams 10 to be combined may be denoted by $\lambda n$. As used herein, "n" is an integer of 1 or more, and is used as a numerical value for distinguishing (specifying) each of the plurality of laser beams 10. In the illustrated example, a relationship of λ1 < λ2 is established. The unit of the peak wavelength λn is discretionary, and is, for example, the nanometer (nm).

In FIG. 1, each of the plurality of laser beams 10 is indicated by a simple straight line. The actual laser beam 10 is a light beam having an intensity distribution in a plane perpendicular to a traveling direction. The intensity distribution can be approximated by a distribution function such as a Gaussian distribution in a plane perpendicular to the traveling direction of the light beam. The diameter of the light beam is defined, for example, by the size of a cross-sectional area having an intensity $1/e^2$ or more times the intensity at the center of the beam. In the example illustrated in FIG. 1, the laser beam 10 is collimated by an optical system such as a collimator lens (hereinafter, simply referred to as "collimator") 20. The collimated $1/e^2$ beam diameter is, for example, 1 mm to 30 mm, and is smaller than a spacing between adjacent ones of the collimators 20. In the drawing, to schematically illustrate the traveling direction of a collimated light beam such as the laser beam 10, the central axis of each light beam is represented by a straight line. These straight lines may be regarded as indicating light rays passing through the center of each light beam.

The wavelength beam combining device 100 illustrated in FIG. 1 includes the collimator 20, an optical element 30, and a pair of diffraction gratings 40 arranged in parallel. The wavelength beam combining device 100 combines a plurality of collimated beams whose peak wavelengths are different from each other and whose central axes of beams emitted in a first direction are arranged in a second direction intersecting the first direction. In the example illustrated in FIG. 1, the first direction is parallel to a Z-axis direction and the second direction is parallel to an X-axis direction. Thus, the second direction is orthogonal to the first direction. In the present disclosure, unless otherwise specified, the first direction is parallel to the Z-axis direction and the second direction is parallel to the X-axis direction.

In the example illustrated in FIG. 1, two laser beams 10 whose central axes are parallel to each other enter the collimator 20. The collimator 20 is configured to convert the plurality of laser beams 10 having mutually different peak wavelengths into a plurality of collimated beams 11. The collimator 20 is an assembly of collimator lenses. The collimator 20 may be a lens array in which lenses equal in number to the plurality of laser beams 10 are made of one optical material, or may be an optical component assembly in which a plurality of lenses are arranged. The collimated beam 11 transmitted through the collimator 20 and having a reduced divergence angle is not strictly parallel light, but is approximated to a Gaussian beam in which the product of a divergence angle and a beam diameter is a finite value. The optical material of the collimator 20 may be an optical glass such as synthetic silica or BK7. The optical glass is a glass material having a high transmittance for visible light.

The optical element 30 is configured to reduce a distance between the beam central axes of the plurality of collimated beams 11 and cause the collimated beams 11 to exit. The optical element 30 is disposed between the collimator 20 and a first diffraction grating 40A to be described below. The optical element 30 may include at least one lens that condenses the plurality of collimated beams 11 in a first plane (XZ plane) extending in the first direction (Z-axis direction) and the second direction (X-axis direction). The lens constituting the optical element 30 is, for example, an axially symmetric lens such as a spherical lens or an aspherical lens, or a cylindrical lens. The material of the lens constituting the optical element 30 may be an optical glass such as synthetic silica or BK7. A plurality of high-power laser beams enter the lens, and accordingly the lens is preferably made of synthetic silica.

The optical element 30 is, for example, a beam reducer. The optical element 30 in one embodiment of the present disclosure is a beam reducer. For example, a Keplerian beam reducer or a Galilean beam reducer can be used as the beam reducer. Alternatively, as the optical element 30, an anamorphic lens may be used instead of the beam reducer. The beam reducer in one embodiment of the present disclosure can not only reduce the distance between the beam central axes of the plurality of collimated beams 11, but also reduce the beam diameter of each collimated beam 11.

In the examples illustrated in FIGS. 1 and 2, the optical element (beam reducer) 30 is of the Galilean type, but is not limited thereto. The optical element 30 includes two lenses 31 and 32 each configured to condense light in the XZ plane. Each of the two lenses 31 and 32 is a cylindrical lens, has a function of condensing light in the XZ plane, and has no function of condensing light in the YZ plane. The two lenses 31 and 32 may be referred to as an incident-side lens 31 and an exiting-side lens 32, respectively.

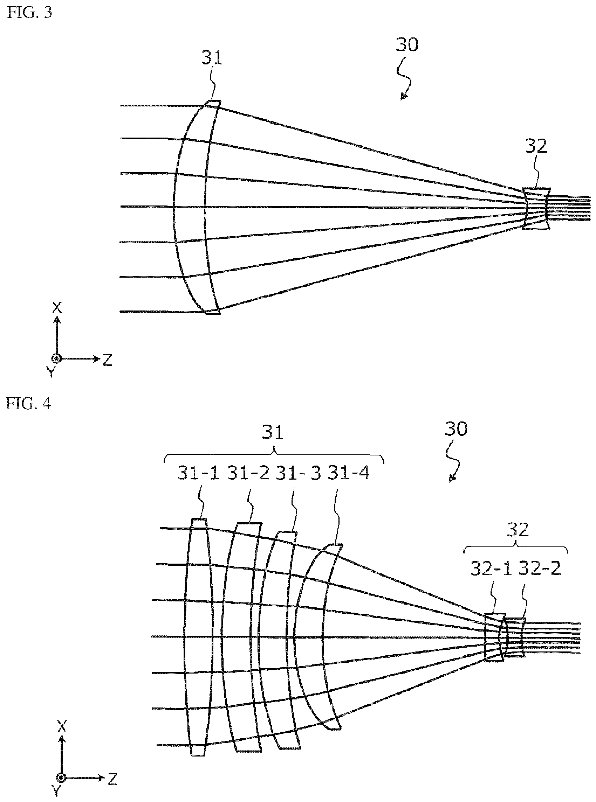

Each of FIGS. 3 and 4 is a view schematically illustrating a configuration example of a beam reducer having a Galilean lens configuration. Each of FIGS. 3 and 4 illustrates seven collimated beams with central axes parallel to each other. The optical element 30 illustrated in FIG. 3 is a beam reducer constituted of the two lenses 31 and 32. The incident-side lens 31 is an aspherical lens, and the exiting-side lens 32 is a spherical lens. When an aspherical lens is used, the optical element 30 can be designed with a reduced number of lenses.

The optical element 30 illustrated in FIG. 4 is a beam reducer including a plurality of lens groups. Each of lenses constituting the plurality of lens groups is a spherical lens. The incident-side lens 31 includes four spherical lenses 31-1 to 31-4, and the exiting-side lens 32 includes two spherical lenses 32-1 and 32-2. When a spherical lens is used in this way, spherical aberration is likely to occur. However, with the optical element 30 constituted of a plurality of lens groups, an optical path is gradually reduced, so that the spherical aberration can be reduced. Thus, the optical element 30 can include a plurality of axially symmetric lenses.

Reference is again made to FIG. 1. The optical element 30 may include a lens with a positive focal distance and a lens with a negative focal distance. In the example illustrated in FIG. 1, the lens 31 of the optical element 30 is a cylindrical lens with a positive focal distance, and the lens 32 is a cylindrical lens with a negative focal distance. By using a lens with a negative focal distance, the distance between the two lenses can be reduced, and as a result, the optical path length of the laser beam can be reduced.

The focal distance of the incident-side lens 31 illustrated in FIG. 1 is set to f1 and the focal distance of the exiting-side lens 32 is set to f2. The optical element 30 being a beam reducer has a magnification factor M for reducing an incident light pitch to 1/M. The magnification M of the beam reducer is determined by the ratio of the lens focal distances, and is given by Equation (1) below. In Equation (1), p1 is a pitch of incident light incident on the optical element 30 (incident-side lens 31), and p2 is a pitch of light exiting from the optical element 30 (exiting-side lens 32), that is, a pitch of incident light incident on the first diffraction grating 40A. The magnification M of the beam reducer may be, for example, in a range of 2 to 20.

$$M = f1/\text{-}f2 = p1/p2 \quad \text{Equation (1)}$$

For example, when f1 is 100 (mm) and f2 is -10 (mm), M is 10 times. In this case, when the incident light pitch p1 is 5 mm, the pitch p2 of the exiting light is 0.5 mm. Thus, by using the optical element 30, the pitch of incident light incident on the first diffraction grating 40A can be reduced in accordance with the magnification of the beam reducer. This contributes to a reduction in an interval $\Delta\lambda$ between the peak wavelengths of laser beams as described below. However, a residual divergence angle indicating a spread angle from parallel light is increased by the magnification, thereby preserving beam quality.

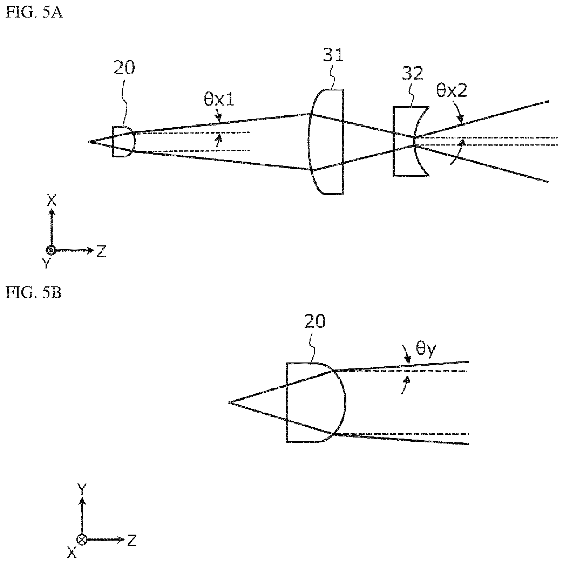

FIG. 5A is a schematic view for illustrating the divergence angle of the laser beam in the XZ plane. FIG. 5B is a schematic view for illustrating the divergence angle of the laser beam in the YZ plane. In FIG. 5A, a divergence angle $\theta x1$ of the collimated beam exiting from the collimator 20 and a divergence angle $\theta x2$ of the collimated beam transmitted through the optical element 30 and exiting from the exiting-side lens 32 satisfy the relationship of Equation (2) below.

$$\theta x2 = M \cdot \theta x1 \quad \text{Equation (2)}$$

Thus, the distance between the beam central axes of the plurality of collimated beams is reduced by the action of the optical element 30, and the residual divergence angle is increased. However, by adopting at least one cylindrical lens that has no function of condensing light in the YZ plane but condenses light in the XZ plane, the distance between the beam central axes of the plurality of collimated beams in the second direction (X-axis direction) can be reduced as illustrated in FIG. 1 while maintaining a residual divergence angle $\theta y$ in a third direction (Y-axis direction) orthogonal to the first and second directions as illustrated in FIG. 5B. In the present embodiment, the incident light pitch does not need to be reduced in the Y-axis direction, which eliminates a need of a beam reducer in that direction.

The pair of diffraction gratings 40 illustrated in FIG. 1 include the first and second diffraction gratings 40A and 40B arranged in parallel between the collimator 20 and the light converger 50. Each of the first and second diffraction gratings 40A and 40B is a transmissive diffraction grating. However, the diffraction grating 40 may be a reflective diffraction grating. In the present disclosure, a diffraction grating of a type that allows a portion of light to be reflected at the diffraction grating and allows another portion of light to be transmitted through the diffraction grating is referred to as a "transmissive diffraction grating," and a diffraction grating of a type that does not allow light to transmit the diffraction grating is referred to as a "reflective diffraction grating."

In contrast to the transmissive diffraction grating, the reflective diffraction grating includes a member (for example, a metal mirror) for reflection, and light absorption by the member is not ignorable. Therefore, with the reflective diffraction grating, when the intensity of a laser beam incident thereon is increased, heat generation due to light absorption may cause deterioration in the performance of the diffraction grating or damage of the diffraction grating. Therefore, in the embodiment of the present disclosure, a transmissive diffraction grating is desirable to be used. A base body of the diffraction grating 40 may be made of a material having a low absorptance at the peak wavelength of the laser beam, for example, synthetic silica. The cross-sectional shape of the grating is, for example, rectangular or trapezoidal. As described below, transmitted light can also be used rather than reflected light from the transmissive diffraction grating.

The degree of parallelism between the first diffraction grating 40A and the second diffraction grating 40B is evaluated by an angle between a first normal line normal to a surface of the first diffraction grating 40A where diffraction grooves are formed and a second normal line normal to a surface of the second diffraction grating 40B where diffraction grooves are formed. In the embodiment of the present disclosure, the angle between the first normal line and the second normal line is preferably in a range of 180° ±1°.

The first diffraction grating 40A is disposed at a position where a plurality of collimated beams 12 exiting from the optical element 30 are received, and diffracts the plurality of collimated beams 12 in different directions depending on the wavelengths to allow the plurality of collimated beams 12 to enter the same region (or incident point) 41 of the second diffraction grating 40B. The second diffraction grating 40B further diffracts the plurality of collimated beams 12 diffracted by the first diffraction grating 40A in the region 41 to form a wavelength-combined beam 19, and causes the wavelength-combined beam 19 to exit in the first direction (Z-axis direction).

In the example illustrated in FIG. 1, the first diffraction grating 40A and the second diffraction grating 40B have the same structure. The extending direction of the diffraction grooves of the first diffraction grating 40A and the extending direction of the diffraction grooves of the second diffraction grating 40B are arranged to be parallel to each other. More specifically, the normal line of the first diffraction grating 40A and the normal line of the second diffraction grating 40B are parallel to each other, and the extending direction of the diffraction grooves of the first diffraction grating 40A and the extending direction of the diffraction grooves of the second diffraction grating 40B are parallel to each other. In the example illustrated in FIG. 1, the extending direction of the diffraction grooves of each of the first diffraction grating 40A and the second diffraction grating 40B is parallel to the Y-axis. It can also be said that the dispersion directions (XZ plane) of the first diffraction grating 40A and the second diffraction grating 40B are the same. The diffraction groove cycle (interval between the centers of the diffraction grooves) of the first diffraction grating 40A is equal to the diffraction groove cycle (interval between the centers of the diffraction grooves) of the second diffraction grating 40B. By adopting such a configuration, the wavelength-combined beam 19 can exit in the first direction (Z-axis direction) parallel to the exiting direction of each collimated beam 11. In the example illustrated in FIG. 1, the exit direction of the plurality of collimated beams 12 and the exit direction of the wavelength-combined beam 19 are parallel to each other.

The wavelength-combined beam 19 may be a laser beam in which n laser beams 10 having peak wavelengths of $\lambda1, \lambda2,..., \lambda n$ are wavelength-combined. The light intensity of the wavelength-combined beam 19 in which the plurality of laser beams 10 are coaxially superimposed is equal to the sum of the light intensities of the laser beams 10. As more laser beams 10 are combined, the output and power density of the wavelength-combined beam 19 can increase proportionally.

The wavelength beam combining device 100 in the present embodiment further includes the light converger 50 that converges the wavelength-combined beam 19. The light converger 50 in the example illustrated in FIG. 1 is a converging lens that converges the wavelength-combined beam 19. As described below, the light converger 50 may include two or more lenses.

In the example illustrated in FIG. 1, the traveling direction of the plurality of laser beams 10, the traveling direction of the plurality of collimated beams 11, and the traveling direction of the wavelength-combined beam 19 are parallel to the first direction (Z-axis direction). The wavelength-combined beam 19 is converged by the light converger 50 and enters an optical transmission fiber 60. In this manner, the wavelength-combined beam exiting from the wavelength beam combining device can be efficiently combined into, for example, an optical transmission fiber by the light converger.

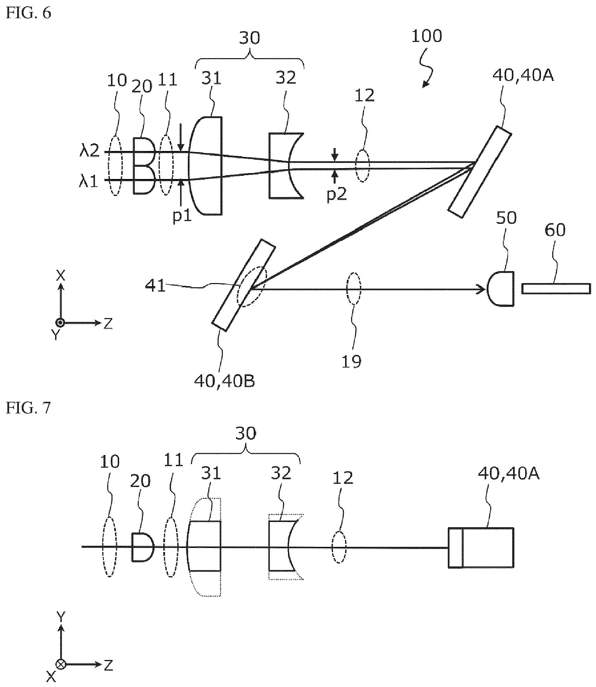

FIG. 6 is a plan view schematically illustrating another configuration of the wavelength beam combining device according to the first embodiment of the present disclosure as seen along the direction perpendicular to the XZ plane. FIG. 7 is a plan view schematically illustrating another configuration of the wavelength beam combining device according to the first embodiment of the present disclosure as seen along the direction perpendicular to the YZ plane.

In the examples illustrated in FIGS. 6 and 7, each of the two lenses 31, 32 is an axially symmetric lens. In FIG. 7, each of the two lenses 31 and 32 has been subjected to cutting at the top and bottom in the Y-axis direction to leave a central region through which the laser beam passes. In FIG. 7, for reference, an outer shape of the lens before cutting the top and bottom of the lens is indicated by a dotted line. In this example, the size of each of the two lenses 31 and 32 in the X-axis direction is larger than the size thereof in the Y-axis direction. By adopting such a lens structure, reduction in lens cost, reduction in lens processing time, and reduction in the weight of the optical element 30 are expected. The lens structure can contribute to saving the internal space of the wavelength beam combining device 100 and downsizing the wavelength beam combining device 100. The two lenses 31 and 32 may be formed by injection molding or glass molding instead of performing cutting processing.

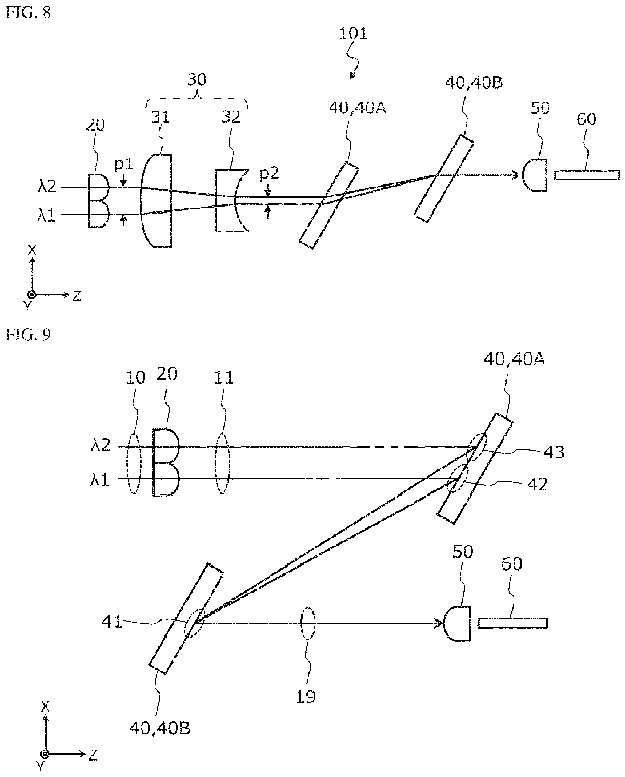

FIG. 8 is a plan view schematically illustrating another configuration of a wavelength beam combining device according to the first embodiment of the present disclosure as seen along the direction perpendicular to the XZ plane. A wavelength beam combining device 101 illustrated in FIG. 8 includes the pair of diffraction gratings 40 arranged in parallel. Each of the first and second diffraction gratings 40A and 40B is a transmissive diffraction grating as in the wavelength beam combining device 100 illustrated in FIG. 1. However, in this example, transmitted light is used instead of reflected light. Thus, the transmitted light of the transmissive diffraction grating can also be used.

When wavelength beam combining is performed, by reducing the distance between the beam central axes of a plurality of collimated beams by the action of the optical element 30, the pitch of incident light incident on the first diffraction grating can be reduced and the interval $\Delta\lambda$ between the peak wavelengths of the laser beams can be reduced. Thus, the number of wavelengths to be subjected to wavelength multiplexing can be increased, and as a result, the output of the wavelength beam combining device can be increased. Thus, the wavelength beam combining device 100 according to the present embodiment can increase the output and power density of a wavelength-combined laser beam.

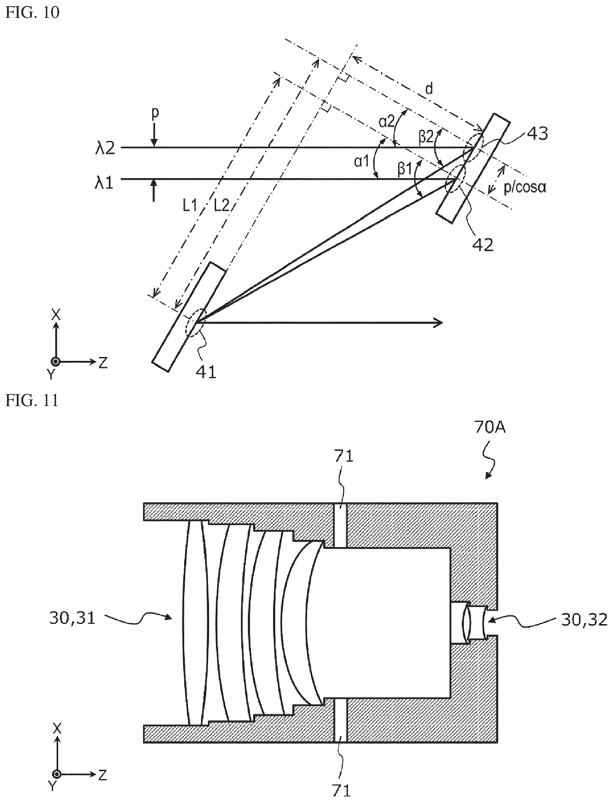

The number of laser beams to be combined would be limited by a pitch of incident light incident on a diffraction grating. The limitation will be described below with reference to FIGS. 9 and 10.

FIG. 9 is a plan view schematically illustrating a configuration of a wavelength beam combining device including no optical element. The wavelength beam combining device illustrated in FIG. 9 has a configuration as in the wavelength beam combining device 100 illustrated in FIG. 1 from which the optical element 30 has been removed. FIG. 10 is a schematic view for illustrating a geometrical relationship between an incident angle and a diffraction angle of a laser beam in a pair of diffraction gratings 40 arranged in parallel.

As illustrated in FIG. 9, when a plurality of laser beams 10 whose central axes are parallel to each other are combined using the pair of diffraction gratings 40, an incident light pitch would not be able to be narrowed due to limitation in size of a collimator 20. As a result, the number of laser beams to be combined would be limited, resulting in a difficulty in increasing the output of the laser beam. A detailed description thereof will be given below.

As illustrated in FIG. 10, a distance between the diffraction gratings is set to d and the incident light pitch is set to p. The distance from an incident point 42 on the first diffraction grating 40A, where the collimated beam 11 with the peak wavelength $\lambda 1$ enters, to an incident point 41 on the second diffraction grating 40B described above is set to L1, and the distance from an incident point 43 on the first diffraction grating 40A, where the collimated beam 11 with the peak wavelength $\lambda 2$ enters, to the incident point 41 on the second diffraction grating 40B is set to L2.

The incident angles of the two collimated beams 11 having the peak wavelengths of $\lambda 1$ and $\lambda 2$ on the first diffraction grating 40A are set to $\alpha 1$ and $\alpha 2$, respectively. As described above, in the present embodiment, the central axes of the two collimated beams 11 incident on the first diffraction grating 40A are parallel to each other. Accordingly, the incident angle $\alpha 1$ is equal to the incident angle $\alpha 2$. The incident angles $\alpha 1$ and $\alpha 2$ are angles formed by the central axes of the collimated beams 11 relative to the normal direction of the first diffraction grating 40A. When the two collimated beams 11 having the peak wavelengths of $\lambda 1$ and $\lambda 2$ enter the first diffraction grating 40A to form reflected and diffracted light beams and the diffracted angles of the reflected and diffracted light beams are set to $\beta 1$ and $\beta 2$, respectively, the following relationships Equation (3) and Equation (4) are established. Furthermore, from the distances L1 and L2, Equation (5) below is geometrically established.

$$\sin\alpha 1 + \sin\beta 1 = N \bullet m \bullet \lambda \quad \text{Equation (3)}$$

$$\sin\alpha 2 + \sin\beta 2 = N \bullet m \bullet \lambda \quad \text{Equation (4)}$$

$$d \cdot \tan\beta 2 - d \cdot \tan\beta 1 = p/\cos\alpha \quad \text{Equation (5)}$$

In these equations, N is the number of grooves per unit length (for example, 1 mm) of the first diffraction grating 40A, m is a diffraction order, and $\lambda$ is the wavelength of light. The number N of grooves per unit length is the reciprocal of the grating groove period. Each of the incident angles $\alpha 1$ and $\alpha 2$ is represented by $\alpha$.

The interval $\Delta\lambda$ between the peak wavelengths of the laser beams is proportional to the incident light pitch p and is obtained by solving Equation (3) to Equation (5) above. First, $\beta 1$ is obtained by substituting $\lambda 1$, $\alpha$, N, and m into Equation (3) above. Subsequently, $\beta 2$ is obtained by substituting d, p, $\alpha$, and $\beta 1$ into Equation (5) above. Subsequently, $\lambda 2$ is obtained by substituting $\alpha$, $\beta 2$, N, and m into Equation (4) above. Finally, $\Delta\lambda$ ($= \lambda 2 - \lambda 1$) is obtained from $\lambda 1$ and $\lambda 2$. For example, when $\alpha = 30$ (deg), N = 2600 (the number of grooves/mm), m = 1, d = 200 (mm), p = 5 (mm), and $\lambda 1 = 440$ (nm), $\beta 1 = 40.1$ (deg), L1 = 168.4 (mm), $\lambda 2 = 444.87$ (nm), $\beta 2 = 41.0$ (deg), and L2 = 174.1 (mm). In this example, the wavelength interval $\Delta\lambda$ is 4.87 (nm).

The wavelength interval $\Delta\lambda$ can be reduced by reducing the incident light pitch p, increasing d, or increasing N. However, when d is increased, the optical path length becomes longer, and when N is increased, the diffraction condition is limited. Therefore, in the present embodiment, $\Delta\lambda$ is reduced by reducing the incident light pitch p. To reduce the incident light pitch p, reduction in the size of the lens of the collimator 20 would be considered. However, when the size of the lens is reduced, the focal distance of the lens is shortened, resulting in increase in the optical magnification. Accordingly, the residual divergence angle is further increased. Therefore, it is not preferable to reduce the size of the lens of the collimator 20.

1. Case of Using no Optical Element

In the wavelength beam combining device illustrated in FIG. 9, for example, when $\alpha = 30$ (deg), N = 2500 (the number of grooves/mm), m = 1, d = 200 (mm), p = 10 (mm), and $\lambda 1 = 460$ (nm), $\beta 1 = 40.5$ (deg), L1 = 171.1 (mm), $\lambda 2 = 469.71$ (nm), $\beta 2 = 42.4$ (deg), and L2 = 182.6 (mm). In this case, the wavelength interval $\Delta\lambda$ is 9.71 (nm). In this way, when the incident light pitch p is 10 (mm), the wavelength interval $\Delta\lambda$ is 9.71 (nm), and as a result, for example, when wavelengths of laser beams emitted from semiconductor laser devices having gain wavelengths of 450 nm to 470 nm are synthesized, the synthesis of three wavelengths is an upper limit.

## 2. Case of Using Optical Element

In the wavelength beam combining device illustrated in FIG. 1, when an optical element having a magnification M = 5 is used, the incident light pitch p of the collimated beam incident on the first diffraction grating 40A is reduced from 10 (mm) to 2 (mm). When $\alpha$ = 30 (deg), N = 2500 (the number of grooves/mm), m = 1, d = 200 (mm), p = 2 (mm), and $\lambda$1 = 460 (nm), $\beta$1 = 40.5 (deg), L1 = 171.1 (mm), $\lambda$2 = 462.01 (nm), $\beta$2 = 40.9 (deg), and L2 = 173.4 (mm). In this case, the wavelength interval $\Delta\lambda$ is 2.01 (nm). Thus, when the incident light pitch p is 2 (mm), the wavelength interval $\Delta\lambda$ is 2.01 (nm), and as a result, for example, when wavelengths of laser beams emitted from semiconductor laser devices having gain wavelengths of 450 nm to 470 nm are synthesized, at most 11 wavelengths can be synthesized. For example, a nitride semiconductor laser can be used as the semiconductor laser. Thus, by reducing the incident light pitch, the number of synthesized laser beams can be increased. Increase in the number of laser beams that can be synthesized allows for increasing the output of the synthesized laser beam. The number of synthesized laser beams is two or more, and may be, for example, four or more, seven or more, ten or more, or fifteen or more.

The wavelength beam combining device according to one embodiment of the present disclosure may include a lens barrel accommodating at least one lens. FIG. 11 is a cross-sectional view schematically illustrating an example of a configuration of a lens barrel. FIG. 11 illustrates a cross section of a lens barrel parallel to the XZ plane. The lens barrel may have at least one through hole connecting the inside of the lens barrel and the outside of the lens barrel. A lens barrel 70A illustrated in FIG. 11 has two through holes 71 at positions between the incident-side lens 31 and the exiting-side lens 32 included in the optical element 30. When a lens is fixed to the lens barrel by using, for example, an organic material, outgassing may occur. Even in such a case, the outgas can be released to the outside of the lens barrel through the through holes 71.

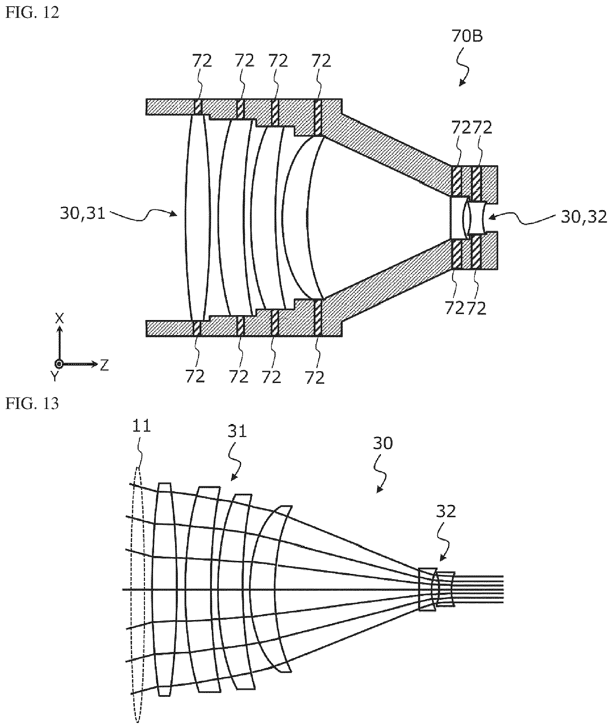

FIG. 12 is a cross-sectional view schematically illustrating another example of a configuration of a lens barrel. FIG. 12 illustrates a cross section of a lens barrel parallel to the XZ plane. In this example, each of the incident-side lens 31 and the exiting-side lens 32 included in the optical element 30 is fixed to a lens barrel 70B by a fastener 72. The fastener 72 is, for example, a set screw. By fixing the lens to the lens barrel with a fastener such as a set screw instead of an organic material, the outgassing can be reduced.

An inner surface of each of the lens barrels 70A and 70B may be black. Each surface of the lens may be provided with an anti-reflective coating (for example, an AR coating). However, a small amount of reflected light reflected at an interface between the lens and an air layer may cause stray light. When the inner surface of the lens barrel is, for example, coated or treated in black, the inner surface exhibits a black color, so that the generation of stray light can be reduced.

In the embodiment described above, the plurality of collimated beams 11 are parallel to each other when incident on the optical element 30, but is not necessarily parallel to each other. FIG. 13 is a view schematically illustrating a state in which the plurality of collimated beams 11 whose beam central axes are not parallel to each other enter the optical element 30. In the example of FIG. 13, the traveling directions of seven collimated beams 11 form a predetermined angle. In such a case, when a lens group constituting the optical element 30 is appropriately designed, the distance between the beam central axes of the plurality of collimated beams 11 can be reduced and the plurality of collimated beams 11 can exit with the beam central axes parallel to each other.

By accommodating the incident-side lens 31 and the exiting-side lens 32 in different lens barrels and adjusting the distance between the two lens barrels, the plurality of collimated beams 11 can be in any of parallel, divergent, and convergent states.

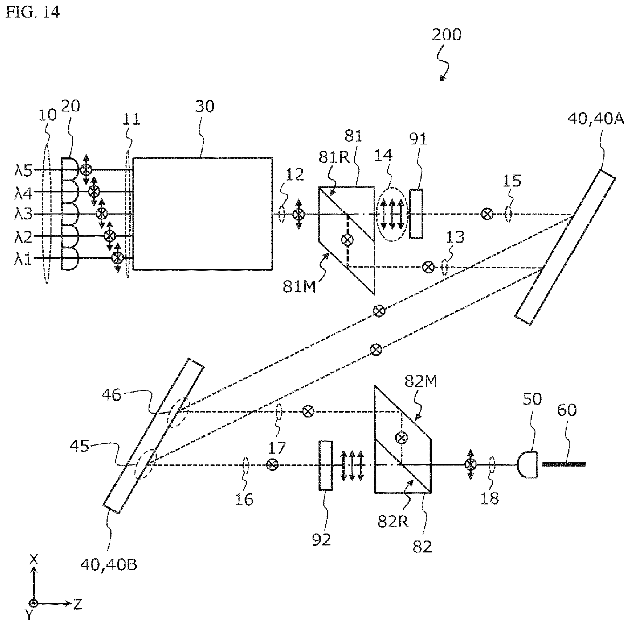

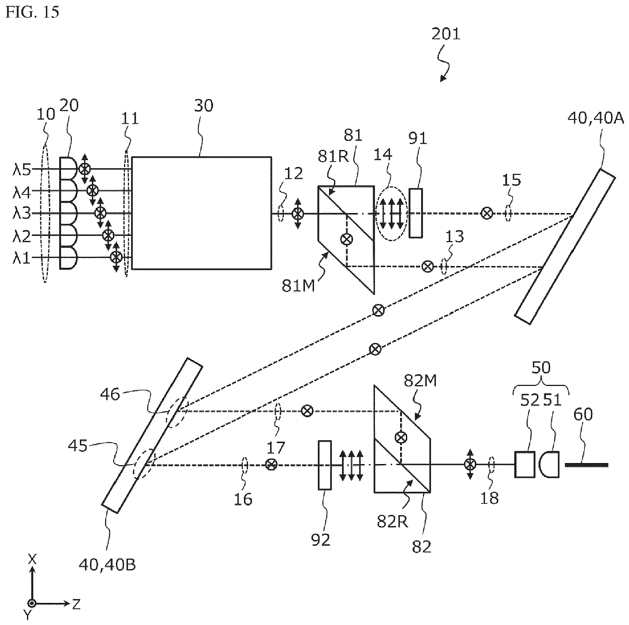

Second Embodiment of Wavelength Beam Combining Device A wavelength beam combining device according to a second embodiment of the present disclosure is described with reference to FIGS. 14 and 15.

The wavelength beam combining device according to the second embodiment of the present disclosure further includes a polarization split and synthesis mechanism. Specifically, the wavelength beam combining device may further include a polarization beam splitter, a first polarization conversion element, a polarization beam combiner, and a second polarization conversion element. According to such a wavelength beam combining device, a plurality of laser beams 10 having mutually different peak wavelengths can be combined and the output and power density of a wavelength-combined beam can be further increased.

FIG. 14 is a view schematically illustrating a configuration of the wavelength beam combining device according to the second embodiment of the present disclosure as seen along the direction perpendicular to the XZ plane. A wavelength beam combining device 200 further includes a polarization beam splitter 81, a first polarization conversion element 91, a polarization beam combiner 82, and a second polarization conversion element 92. The polarization beam splitter 81 is disposed between the optical element 30 and the first diffraction grating 40A. The first polarization conversion element 91 is disposed between the polarization beam splitter 81 and the first diffraction grating 40A. The polarization beam combiner 82 is disposed between the second diffraction grating 40B and the light converger 50. The second polarization conversion element 92 is disposed between the second diffraction grating 40B and the polarization beam combiner 82.

The polarization beam splitter 81 splits each of the plurality of collimated beams 12 subjected to the action of the optical element 30 into a plurality of first polarized beams 13 linearly polarized in a first polarization direction (Y-axis direction) and a plurality of second polarized beams 14 linearly polarized in a second polarization direction (direction in the XZ plane) orthogonal to the first polarization direction. In FIG. 14, for the sake of simplicity, the plurality of collimated beams 12 are collectively represented by one straight line. However, actually, five collimated beams 12 in which the distance between the beam central axes of the collimated beams is reduced by the action of the optical element 30 travel side by side.

The polarization beam splitter 81 in the example illustrated in FIG. 14 has a reflective/transmissive surface 81R having transmittance and reflectance varying depending on the polarization state of the incident collimated beam 12. The reflective/transmissive surface 81R serves as a reflection surface with respect to the first polarized beam 13 and serves as a transmission surface with respect to the second polarized beam 14. The reflective/transmissive surface 81R splits the incident collimated beam 12 into the first polarized beam 13 and the second polarized beam 14. The polarization beam splitter 81 further includes a mirror 81M that reflects, in the first direction, the first polarized beam 13 reflected in the second direction by the reflective/transmissive surface 81R. The first polarized beam 13 and the second polarized beam 14 exit in parallel from the polarization beam splitter 81. Light is an electromagnetic wave, and the electromagnetic field of the light is a transverse wave that oscillates in a direction perpendicular to the traveling direction of the light. The polarization state of the laser beam may vary depending on a gain medium, a resonator, an oscillation scheme, and the like of a laser light source. A laser beam in a specific polarization state at the stage of being emitted from the laser light source may also be subjected to a change in a polarization state or be depolarized while passing through a transmission medium such as an optical fiber. The reflective/transmissive surface 81R of the polarization beam splitter 81 can selectively reflect polarized light components linearly polarized in a predetermined direction and transmit polarized light components linearly polarized in a direction orthogonal to the predetermined direction. The reflective/transmissive surface 81R is provided with, for example, a polarization-dependent dielectric multilayer film.

In general, when a light beam is incident on an object surface, a plane in which a normal line of the object surface at an incident point and a traveling direction vector (wave number vector) of the light beam extend is defined as a "plane of incidence." Light linearly polarized in a direction perpendicular to the plane of incidence is called S-polarized light, and light linearly polarized in a direction parallel to the plane of incidence is called P-polarized light. In the example of FIG. 14, the reflective/transmissive surface 81R of the polarization beam splitter 81 is perpendicular to the XZ plane, and the normal line of the reflective/transmissive surface 81R is in a plane parallel to the XZ plane. The traveling direction of the collimated beam 12 is parallel to the XZ plane. Therefore, the "plane of incidence" for defining the polarization direction when the collimated beam 12 is incident on the reflective/transmissive surface 81R is parallel to the XZ plane. In the present disclosure, light linearly polarized in the first polarization direction being a direction perpendicular to the XZ plane is referred to as "S-polarized light." Light linearly polarized in a direction parallel to the XZ plane (second polarization direction orthogonal to the first polarization direction) is referred to as "P-polarized light." In the accompanying drawings, the "S-polarized light" is illustrated by a symbol surrounding a cross symbol with a small circle, and the "P-polarized light" is illustrated by a symbol with a double-headed arrow. Because the polarization direction of the "P-polarized light" is parallel to the XZ plane but perpendicular to the traveling direction of the laser beam, when the traveling direction of the laser beam is rotated by reflection or diffraction while being parallel to the XZ plane, the polarization direction of the "P-polarized light" is also rotated in a plane parallel to the XZ plane. Therefore, the "second polarization direction" in the present disclosure is defined as a direction perpendicular to the traveling direction of the laser beam and perpendicular to the first polarization direction.

In the example illustrated in FIG. 14, a transparent member having a parallelogram cross section is fixed to a transparent prism (or right-angle prism) having a triangular cross section via the reflective/transmissive surface 81R. The mirror 81M is formed on an inclined surface of the transparent member having a parallelogram cross section. When the condition of total reflection is applied, a mirror surface needs not to be formed, and an AR coating may be applied instead of the mirror 81M. Instead of the transparent member having a parallelogram cross section, a combination of two right-angle prisms can be used. However, by using the transparent member having a parallelogram cross section, the right-angle prism need not to be adjusted and reflection at an interface between the two right-angle prisms is further reduced.

The first polarization conversion element 91 converts the plurality of second polarized (P-polarized) beams 14 into a plurality of third polarized beams 15 linearly polarized in the first polarization (S polarization) direction. The plurality of second polarized beams 14 transmitted through the reflective/transmissive surface 81R of the polarization beam splitter 81 are converted into the third polarized beams 15 by the first polarization conversion element 91. The first polarization conversion element 91 is, for example, a half-wave plate (half-wave retardation plate). The half-wave plate has birefringence and changes retardation between two orthogonal components of an electromagnetic wave traveling in a thickness direction. By disposing a slow axis or a fast axis of the half-wave plate to form an angle of 45° relative to the polarization direction of the second polarized (P-polarized) beam 14, the half-wave plate can convert P-polarized light into S-polarized light.

In the example illustrated in FIG. 14, positions on the first diffraction grating 40A where the plurality of first polarized beams 13 enter are different from positions on the first diffraction grating 40A where the plurality of third polarized beams 15 enter. The first diffraction grating 40A diffracts the plurality of first polarized beams 13 in different directions according to the wavelengths to make the plurality of first polarized beams 13 enter a first region 45 of the second diffraction grating 40B, and diffracts the plurality of third polarized beams 15 in different directions according to the wavelengths to make the plurality of third polarized beams 15 enter a second region 46 different from the first region 45 of the second diffraction grating 40B.

The second diffraction grating 40B further diffracts the plurality of first polarized beams 13 incident on the first region 45 to form a first wavelength-combined beam 16 in which the plurality of first polarized beams are coaxially superimposed, and further diffracts the plurality of third polarized beams 15 incident on the second region 46 to form a second wavelength-combined beam 17 in which the plurality of third polarized beams 15 are coaxially superimposed.

The second polarization conversion element 92 is configured to change the polarization state of the first wavelength-combined beam 16 or the second wavelength-combined beam 17 so that the polarization directions of the first wavelength-combined beam 16 and the second wavelength-combined beam 17 are orthogonal to each other. Similarly to the first polarization conversion element 91, the second polarization conversion element 92 is, for example, a half-wave plate (half-wave retardation plate). In the example illustrated in FIG. 14, the second polarization conversion element 92 is disposed to rotate the polarization direction of the first wavelength-combined beam 16 by 90°. The first wavelength-combined beam 16 transmitted through the second polarization conversion element 92 is linearly polarized in the second polarization direction. Alternatively, the second polarization conversion element 92 may be positioned to rotate the polarization direction of the second wavelength-combined beam 17 by 90°.

The polarization beam combiner 82 is configured to form a third wavelength-combined beam 18 in which the first wavelength-combined beam 16 and the second wavelength-combined beam 17 are coaxially superimposed and cause the third wavelength-combined beam 18 to exit. In the example illustrated in FIG. 14, the polarization beam combiner 82 has the same structure as the polarization beam splitter 81. In general, a polarization beam splitter can also be used as a polarization beam combiner. However, the orientation is rotated by 180° around the Y axis. In the example illustrated in FIG. 14, the first wavelength-combined beam 16 transmitted through the second polarization conversion element 92 is P-polarized light, and the second wavelength-combined beam 17 is S-polarized light. The polarization beam combiner 82 includes a mirror 82M that reflects, in the second direction, the second wavelength-combined beam 17 traveling in the first direction and a reflective/transmissive surface 82R that reflects the S-polarized light and transmits the P-polarized light. As a result, the polarization beam combiner 82 can cause the third wavelength-combined beam 18 in which the first wavelength-combined beam (P-polarized light) 16 transmitted through the second polarization conversion element 92 and the second wavelength-combined beam (S-polarized light) 17 are coaxially superimposed to exit.

The third wavelength-combined beam 18 is a laser beam obtained by wavelength-combining five laser beams 10 having peak wavelengths of $\lambda 1$, $\lambda 2$, $\lambda 3$, $\lambda 4$, and $\lambda 5$. In this way, the wavelength beam combining device 200 can increase the output and power density of a wavelength-combined laser beam. As more laser beams 10 are combined, the output and power density of the third wavelength-combined beam 18 may increase proportionally.

In the example illustrated in FIG. 14, the laser beams incident on the pair of diffraction gratings 40 are the plurality of first polarized beams 13 of S-polarized light and the plurality of third polarized beams 15 of S-polarized light. In a case in which the diffraction grating has polarization dependency, when a non-polarized laser beam enters, the diffraction efficiency decreases depending on the polarization component. In the present embodiment, each of the pair of diffraction gratings 40 has diffraction grooves parallel to the first polarization direction (Y-axis direction). In the present embodiment, by using the diffraction grating 40 in which the diffraction efficiency with respect to the S-polarized light is higher than the diffraction efficiency with respect to the P-polarized light, the occurrence of optical loss in the diffraction grating can be suppressed.

According to the wavelength beam combining device of the present embodiment, the diffraction grating is paired with the polarization split and synthesis mechanism, and thus the diffraction efficiency can be increased by using the diffraction grating suitable for the polarization state of incident light, and the output and power density can be further increased by coaxializing diffracted light generated by the diffraction grating.

FIG. 15 is a plan view schematically illustrating another configuration of a wavelength beam combining device according to the second embodiment of the present disclosure as seen along the direction perpendicular to the XZ plane. A wavelength beam combining device 201 illustrated in FIG. 15 is different from the wavelength beam combining device 200 illustrated in FIG. 14 in that the wavelength beam combining device 201 includes a light converger 50 including two cylindrical lenses. The differences are described below.

As shown in this example, the light converger 50 may include a first lens 51 that condenses the third wavelength-combined beam 18 in a first plane (XZ plane) including the first direction (Z-axis direction) and the second direction (X-axis direction), and a second lens 52 that condenses the third wavelength-combined beam 18 in a second plane (YZ plane) including the first direction and the third direction (Y-axis direction) orthogonal to the first and second directions. Each of the first and second lenses 51 and 52 is a cylindrical lens. The use of the two cylindrical lenses can cope with an increase of a residual divergence angle in the second direction due to the action of the optical element or the ovalization of a beam shape that may occur due to the action of the diffraction grating.

Alternatively, it is possible to use an axially symmetric lens for the first lens 51 and a cylindrical lens for the second lens 52. In this case, a component that is not able to be condensed by the first lens 51 is condensed by the second lens 52 in advance, so that light condensing performance can be increased.

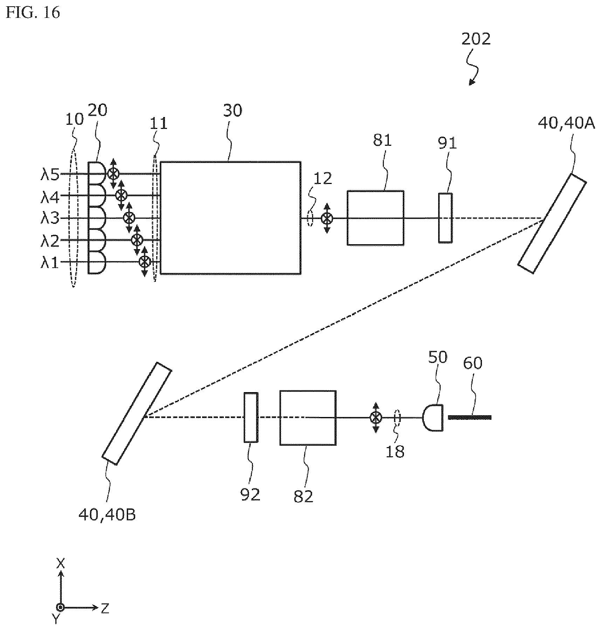

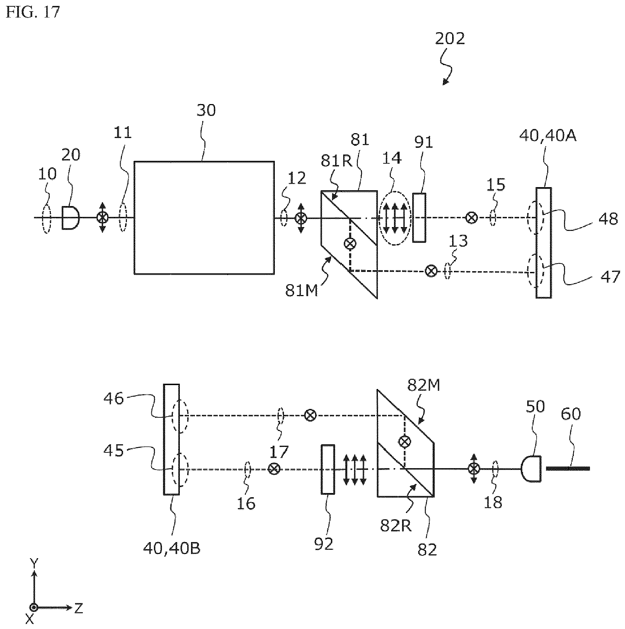

FIG. 16 is a plan view schematically illustrating still another configuration of the wavelength beam combining device according to the second embodiment of the present disclosure as seen along the direction perpendicular to the XZ plane. FIG. 17 is a plan view schematically illustrating still another configuration of the wavelength beam combining device according to the second embodiment of the present disclosure as seen along the direction perpendicular to the YZ plane.

A wavelength beam combining device 202 illustrated in FIGS. 16 and 17 is a modified example of the wavelength beam combining device 200 illustrated in FIG. 14. The wavelength beam combining device 202 is different from the wavelength beam combining device 200 in that polarization split and polarization synthesis of the polarization beam splitter 81 and the polarization beam combiner 82 are performed on the YZ plane instead of the XZ plane. The other configurations are the same as the configurations illustrated in FIG. 14.

In the wavelength beam combining device 202 illustrated in FIG. 17, the polarization beam splitter 81 is configured to perform polarization split of a light beam in the second plane (YZ plane) including the first direction (Z-axis direction) and the third direction (Y-axis direction) orthogonal to the first and second directions. The polarization beam combiner 82 is configured to perform polarization synthesis of light beams in the second plane.

The plurality of first polarized beams 13 diffracted in a first region 47 of the first diffraction grating 40A illustrated in FIG. 17 enter the first region 45 of the second diffraction grating 40B, and the plurality of third polarized beams 15 diffracted in a second region 48 of the first diffraction grating 40A enter the second region 46 of the second diffraction grating 40B. FIG. 17 illustrates no polarized beam traveling from the first diffraction grating 40A to the second diffraction grating 40B. For ease of understanding, the first region 47 of the first diffraction grating 40A and the first region 45 of the second diffraction grating 40B are illustrated at different positions in the Y-axis direction, and the second region 48 of the first diffraction grating 40A and the second region 46 of the second diffraction grating 40B are illustrated at different positions in the Y-axis direction. However, actually, the first region 47 of the first diffraction grating 40A and the first region 45 of the second diffraction grating 40B are present at the same position in the Y-axis direction, and the second region 48 of the first diffraction grating 40A and the second region 46 of the second diffraction grating 40B are present at the same position in the Y-axis direction. According to this configuration, the polarization beam splitter 81 and the polarization beam combiner 82 do not interfere with an optical path of the polarized beam from the first diffraction grating 40A to the second diffraction grating 40B. Furthermore, these optical members can be disposed in a state in which a distance between the first polarization conversion element 91 and the first diffraction grating 40A and a distance between the second polarization conversion element 92 and the second diffraction grating 40B are reduced. Shortening a propagation optical path of a laser beam contributes to suppression of the laser beam spreading due to a residual divergence angle, and as a result, the efficiency of the wavelength beam combining device can be improved.

Embodiment of Direct Diode Laser Device

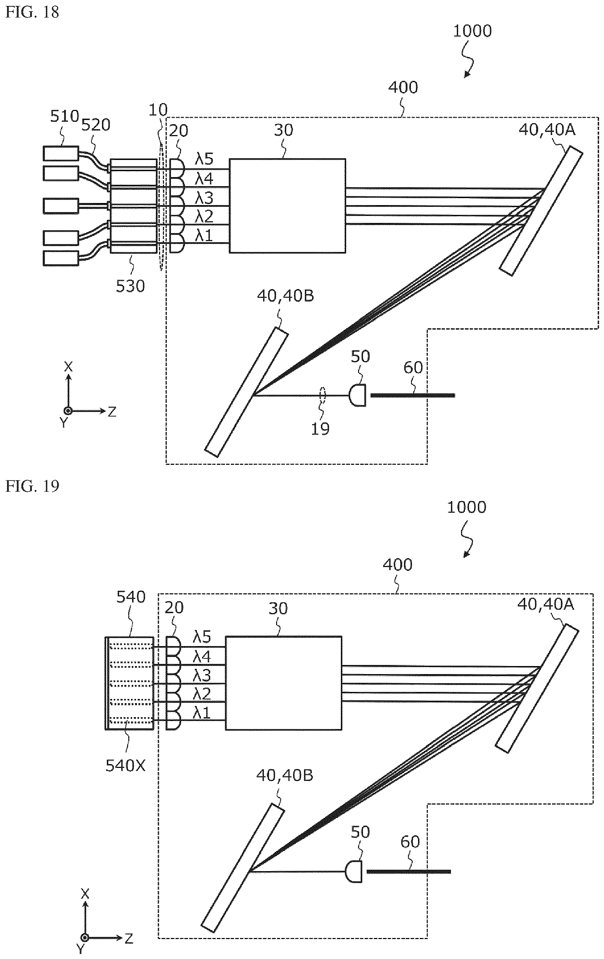

Embodiments of a direct diode laser device according to the present disclosure are described below with reference to FIGS. 18 and 19.

FIG. 18 is a plan view schematically illustrating a configuration of a direct diode laser device according to an embodiment of the present disclosure as seen along the direction perpendicular to the XZ plane. A direct diode laser device 1000 in the present embodiment includes a wavelength beam combining device 400, a plurality of semiconductor laser devices 510 configured to emit laser light beams having mutually different peak wavelengths, and an optical fiber array 530 configured to cause the laser light beams emitted from the plurality of semiconductor laser devices 510 to be formed into laser beams 10 so that the laser beams 10 enter collimators 20 of the wavelength beam combining device 400. In the example illustrated in FIG. 18, laser light beams having peak wavelengths of λ1, λ2, λ3, λ4, and λ5 are emitted from the plurality of semiconductor laser devices 510. The laser light emitted from each semiconductor laser device 510 is optically combined into a corresponding optical fiber 520 of the optical fiber array 530. The plurality of semiconductor laser devices 510 are configured to oscillate in single longitudinal modes with mutually different peak wavelengths. The peak wavelengths are included, for example, in a range from 430 nm to 480 nm. Even though the laser light emitted from each semiconductor laser device 510 is linearly polarized light, when the optical fiber 520 is not a polarization maintaining fiber, the polarization state of the laser light changes in the process of passing through the optical fiber 520. Therefore, each of the plurality of laser beams 10 formed by the optical fiber array 530 in the present embodiment is non-polarized light.

Examples of the semiconductor laser device 510 that oscillates in the single longitudinal mode include an external cavity laser (ECL) device, a distributed feedback (DFB) laser device, and a distributed Bragg reflector (DBR) laser device.

By using the optical fiber array 530, the optical fibers 520 can be aligned, and an exiting angle of the laser beam 10 can be easily adjusted. As a result, the plurality of laser beams 10 can easily exit in parallel from the optical fiber array 530 with high accuracy, for example. By using the optical fiber array 530, an optical fiber extending from a laser light source can also be fused and connected to the optical fiber 520 of the optical fiber array 530. The optical fiber array 530 may include a lens system that collimates the laser light exiting from a tip of each optical fiber 520.

FIG. 18 illustrates the direct diode laser device 1000 including the wavelength beam combining device 400 having the structure illustrated in FIG. 1. However, the direct diode laser device according to the embodiment of the present disclosure is not limited to the example illustrated in FIG. 18, and may include the wavelength beam combining device 101 according to the first embodiment, the wavelength beam combining device 200 or 201 according to the second embodiment, or modified examples of the embodiments. The plurality of laser beams 10 having mutually different peak wavelengths and exiting from the optical fiber array 530 in parallel to the first direction (Z-axis direction) enter the collimators 20 of the wavelength beam combining device 400 in parallel to each other.

In the present embodiment, the optical elements such as the diffraction grating and the polarization conversion element included in the wavelength beam combining device are all plate-type. When the peak wavelength of the laser beam is included in a blue band, these optical elements may be made of a material that is less likely to absorb light in the blue band, such as quartz. Thinning these optical elements and integrating the thinned optical elements in a predetermined space not only contributes to downsizing of the device but also facilitates adjustment of the temperature of the plurality of optical elements as a whole.

The wavelength-combined beam 19 is coupled into the optical transmission fiber 60 by the light converger 50. Examples of the optical transmission fiber 60 suitable for high-power optical transmission in the blue band include optical fibers having a "high OH-pure silica" core with a high OH group content, coreless fibers, and photonic crystal fibers.

FIG. 19 is a plan view schematically illustrating another configuration of the direct diode laser device according to an embodiment of the present disclosure as seen along the direction perpendicular to the XZ plane. The direct diode laser device 1000 illustrated in FIG. 19 includes a semiconductor laser element 540 as a laser light source. The semiconductor laser element 540 is a single light source whose wavelength is controlled. In the example illustrated in FIG. 19, the laser diode element 540 is a laser bar having five laser oscillation regions 540X. The five laser oscillation regions 540X perform laser oscillation at peak wavelengths of λ1, λ2, λ3, λ4, and λ5, and emit laser light beams having the peak wavelengths of λ1, λ2, λ3, λ4, and λ5, respectively. The number of laser oscillation regions 540X included in one laser bar is not limited to five, and may be three or four, or may be six or more, for example, ten or more. The laser diode element 540 may have a plurality of ridges or a plurality of stripe electrodes defining a plurality of the laser oscillation regions 540X. The semiconductor laser element 540 needs not to be a single laser bar and may be a collection of a plurality of laser bars.

According to the direct diode laser device of the present embodiment, the output and power density can be increased by coaxializing diffracted light generated by a diffraction grating. In particular, by using the wavelength beam combining device according to the second embodiment, even though the polarization state of laser light beams emitted from a plurality of semiconductor laser devices or semiconductor laser elements is non-polarized by an optical fiber array device, the laser light beams are converted into linearly polarized light by a polarization beam splitter, so that diffraction efficiency can be increased by using a diffraction grating suitable for each polarization state. By coaxializing the diffracted light generated by such a diffraction grating, the output and power density can be increased.

Embodiment of Laser Processing Machine

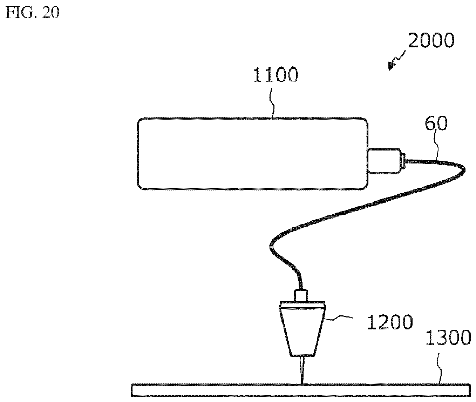

An embodiment of a laser processing machine 2000 according to the present disclosure is described below with reference to FIG. 20. FIG. 20 is a view illustrating a configuration example of a processing machine according to an embodiment of the present disclosure.

The illustrated laser processing machine 2000 includes a light source device 1100 and a processing head 1200 connected to an optical transmission fiber 60 extending from the light source device 1100. The processing head 1200 irradiates a target 1300 with a wavelength-combined beam exiting from the optical transmission fiber 60. In the illustrated example, the number of light source devices 1100 is one. The processing head 1200 may be connected to a plurality of light source devices 1100 via the optical transmission fiber 60.

The light source device 1100 is a direct diode laser device including a wavelength beam combining device having the configuration described above and a plurality of semiconductor laser devices or semiconductor laser elements that emit a plurality of laser beams having mutually different peak wavelengths. The wavelength beam combining device included in the light source device 1100 may be any of the various embodiments described above and modified examples of the embodiments. The number of semiconductor laser devices mounted on the light source device 1100 is not particularly limited, and is determined in accordance with required light output or irradiance. The wavelength of laser light emitted from the semiconductor laser device may also be selected in accordance with a material to be processed.

According to the present embodiment, because a high-power laser beam is generated by wavelength beam combining and is efficiently combined into an optical fiber, a high-power density laser beam having excellent beam quality can be obtained with high energy conversion efficiency.

Laser beams exiting from the processing head 1200 may include laser beams other than laser beams emitted from the semiconductor laser device or the semiconductor laser element and combined. For example, although the peak wavelengths of the laser beams emitted from the semiconductor laser device and wavelength-combined are in a range of 430 nm to 480 nm, laser beams having peak wavelengths of near infrared may be superimposed, for example. Depending on a material to be processed, a laser beam having a wavelength at which the absorption rate of the material is high can be superimposed as appropriate.

A wavelength beam combining device, a direct diode laser device, and a laser processing machine of the present disclosure can be widely used in applications requiring high output and high power density laser light with high beam quality, such as cutting, drilling, local heat treatment, surface treatment of various materials, welding of metal, 3D printing, and the like.

**Claims**

1. A wavelength beam combining device configured to combine a plurality of collimated beams whose peak wavelengths are different from each other and whose central axes of beams emitted in a first direction are arranged in a second direction intersecting the first direction, the wavelength beam combining device comprising:

    an optical element configured to reduce a distance between beam central axes of the plurality of collimated beams and to cause the plurality of collimated beams with the reduced distance therebetween to exit;
    a first diffraction grating; and
    a second diffraction grating; wherein:

        the first diffraction grating is disposed at a position where the plurality of collimated beams exiting from the optical element are received and is configured to diffract the plurality of collimated beams in different directions depending on their wavelengths such that the plurality of collimated beams enter the second diffraction grating; and
        the second diffraction grating is configured to further diffract the plurality of collimated beams diffracted by the first diffraction grating to form a wavelength-combined beam and is configured to cause the wavelength-combined beam to exit.

2. The wavelength beam combining device according to claim 1, wherein the optical element comprises at least one lens configured to condense the plurality of collimated beams in a first plane extending in the first direction and the second direction.

3. The wavelength beam combining device according to claim 2, wherein the at least one lens comprises a first lens with a positive focal distance and a second lens with a negative focal distance.

4. The wavelength beam combining device according to claim 2 or 3, wherein the at least one lens comprises a cylindrical lens.

5. The wavelength beam combining device according to claim 2, wherein:

    the at least one lens comprises two axially symmetric lenses, and
    a size of each of the two axially symmetric lenses in the second direction is greater than a size of each of the two axially symmetric lenses in a third direction perpendicular to the first plane.

6. The wavelength beam combining device according to any one of claims 2 to 5, comprising:

    a lens barrel configured to accommodate the at least one lens,
    wherein the lens barrel comprises at least one through hole.

7. The wavelength beam combining device according to any one of claims 2 to 5, comprising:

    a lens barrel configured to accommodate the at least one lens,
    wherein the at least one lens is fixed to the lens barrel by a fastener.

8. The wavelength beam combining device according to any one of claims 1 to 7, wherein:

    the optical element is a beam reducer, and
    a magnification of the beam reducer is in a rage of 5 to 20.

9. The wavelength beam combining device according to claim 1, comprising:
a light converger configured to converge the wavelength-combined beam.

**10.** The wavelength beam combining device according to claim 9, wherein:

the second diffraction grating causes the wavelength-combined beam to exit in the first direction, and
the light converger comprises:

a first lens configured to condense the wavelength-combined beam in a first plane extending in the first direction and the second direction, and
a second lens configured to condense the wavelength-combined beam in a second plane comprising the first direction and a third direction orthogonal to the first direction and the second direction.

**11.** The wavelength beam combining device according to claim 9 or 10, comprising:

a polarization beam splitter disposed between the optical element and the first diffraction grating;
a first polarization conversion element disposed between the polarization beam splitter and the first diffraction grating;
a polarization beam combiner disposed between the second diffraction grating and the light converger; and
a second polarization conversion element disposed between the second diffraction grating and the polarization beam combiner.

**12.** The wavelength beam combining device according to claim 11, wherein:

the polarization beam splitter is configured to split each of the plurality of collimated beams subjected to an action of the optical element into a plurality of first polarized beams linearly polarized in a first polarization direction and a plurality of second polarized beams linearly polarized in a second polarization direction orthogonal to the first polarization direction,
the first polarization conversion element is configured to convert the plurality of second polarized beams into a plurality of third polarized beams linearly polarized in the first polarization direction,
the first diffraction grating is configured to:

diffract the plurality of first polarized beams in different directions according to wavelengths such that the plurality of first polarized beams enter a first region of the second diffraction grating, and
diffract the plurality of third polarized beams in different directions depending on wavelengths such that the plurality of third polarized beams enter a second region of the second diffraction grating,

the second diffraction grating is configured to:

diffract the plurality of first polarized beams incident on the first region to form a first wavelength-combined beam where the plurality of first polarized beams are coaxially superimposed, and
diffract the plurality of third polarized beams incident on the second region to form a second wavelength-combined beam where the plurality of third polarized beams are coaxially superimposed,

the second polarization conversion element is configured to change a polarization state of the first wavelength-combined beam or the second wavelength-combined beam such that polarization directions of the first wavelength-combined beam and the second wavelength-combined beam are orthogonal to each other, and
the polarization beam combiner is configured to form a third wavelength-combined beam where the first wavelength-combined beam and the second wavelength-combined beam are coaxially superimposed and to cause the third wavelength-combined beam to exit.

**13.** The wavelength beam combining device according to claim 11 or 12, wherein:

the polarization beam splitter is configured to perform polarization split of a light beam in a second plane extending in the first direction and a third direction orthogonal to the first direction and the second direction, and
the polarization beam combiner is configured to perform polarization synthesis of light beams in the second plane.

**14.** A direct diode laser device comprising:

the wavelength beam combining device according to any one of claims 1 to 13;
a plurality of semiconductor laser devices configured to emit laser light beams having mutually different peak wavelengths; and
an optical fiber array configured to cause the laser light beams emitted from the plurality of semiconductor laser devices to be formed into the plurality of laser beams so that the plurality of laser beams enters a collimator of the wavelength beam combining device.

**15.** A laser processing machine comprising:

> at least one direct diode laser device according to claim 14;
> an optical transmission fiber into which the wavelength-combined beam emitted from the at least one direct diode laser device is to be coupled; and
> a processing head connected to the optical transmission fiber.

FIG. 1

FIG. 2

FIG. 3

FIG. 4

FIG. 5A

FIG. 5B

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

**EP 4 481 470 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023089853 A
- JP 2012508453 T